# EUROPEAN PATENT APPLICATION

(11) **EP 0 541 998 A1**
(43) Date of publication of application: **19.05.1993**
(21) Application number: 92117936.2
(22) Date of filing: 20.10.1992
(51) Int. Cl.: C04B 18/16, C04B 28/02

(54) **Refilling material and refilling method**

(30) Priority: 13.11.1991 JP 324133/91
(71) Applicant: KABUSHIKI KAISHA KYOEI RENTA SERVICE, Kurita-gun, Shiga (JP)
(72) Inventor: Im, Young-Il, Kurita-gun, Shiga (JP); Lim, Kang-Haeng, Kurita-gun, Shiga (JP)
(74) Representative: TER MEER - MÜLLER - STEINMEISTER & PARTNER

(57) **Abstract**

The first object of the present invention is to provide a refilling material which refills safely and securely without the need of using a roller. The second object of the present invention is to provide a refilling method using a refilling material which refills safely and securely without the need of using a roller.

The refilling material with liquidity is formed by mixing a hardener such as cement or lime with water and a flowable aggregate such as colloid state remainings produced from washing quarryings.

The refilling method is to refill the refilling space by a refilling material that has liquidity formed by mixing hardener and water and flowable aggregate.

## Description

### Technical Field

The present invention relates to a refilling material having liquidity and the refilling method using this material for constructing.

### Background art

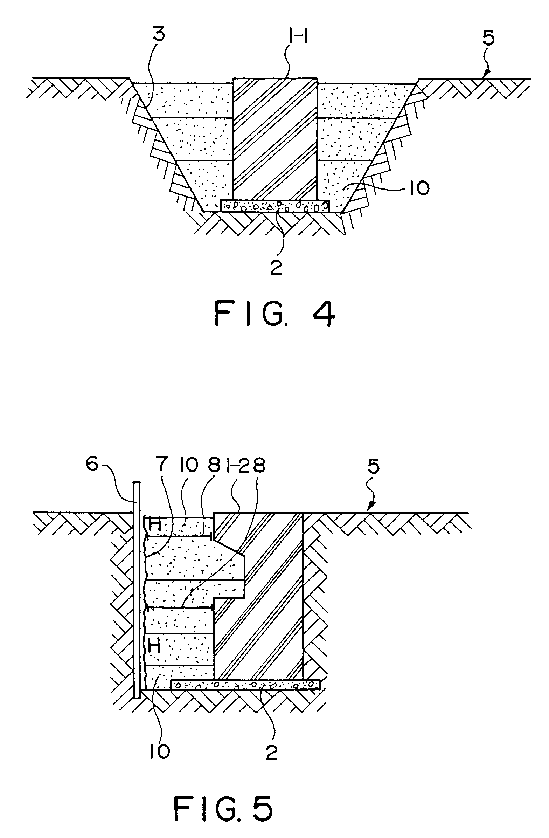

At a base construction where a base such as concrete underground beam is constructed in the basement as is shown in Fig.4, the making of the base is done by digging basement 5 to form a space 3 for construction, then pouring concrete into the bottom part and placing a formwork on top of it to form an underground beam 1-1, and then pouring concrete into the formwork. In this kind of method, the space 3 around the underground beam 1 must be refilled after the underground beam has been constructed by a refilling material 10 such as soil brought from other places or soil that has been digged up at the construction site.

When refilling the refilling material to space 3, the supportability of the portion refilled by the refilling material 10 and the supportability of the basement 5 differ greatly. So when refilling, after the material 19 has been filled into space 3, the refilled part must be hardened for instance by using water when rollering, but rollering could not be done sufficiently especially at deep parts, thus causing unreasonable subsidence to happen afterwards.

To make up for this weak point, a refilling method is carried out where a rollering using tamper etc. is done after a certain height has been refilled, and the entire portion could be hardened and refilled by repeating this refilling and rollering for several times. But this method was inconvenient because a large working space must be kept for the rollering and the working amount would increase, causing the cost to rise.

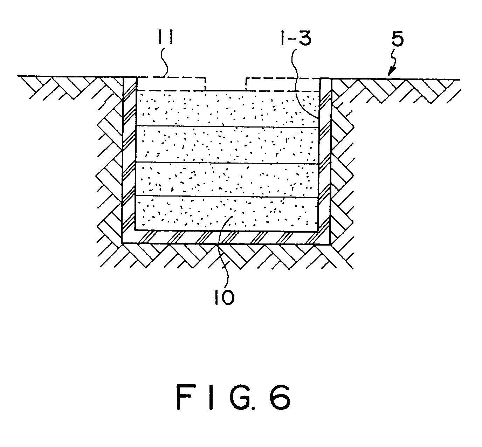

Also, as shown in Fig.5, when constructing an underground structure 1-2 having a jaw part extending to the side at a place surrounded by a temporary structure such as a poling board 6 and a curing sheet 7 inbetween, the rollering may not be done because the refilling material 10 such as industrial waste may not fill the space under the extending portion, thus making subsidence happen to that particular part. Also, when rollering repeatedly, the beam 8 formed between the structure 1-1 and the poling board 6 gets in the way, making it incapable for the rollering to be done sufficiently. If the lower beam is removed at this state, it may cause the poling board 6 to spring up, or subsidence of basement may happen when pulling off the poling board.

As shown in Fig.6, when refilling a closed space such as a purging tank 1-3 constructed underground, workers had to go into the purging tank to do the rollering, which was dangerous because oxygen shortage or gas poisoning may happen. Also, the liquidity of the refilling material was small, so it was difficult to fill the upper corner of the refilling space with the material. To avoid these problems, an upper concrete slab 11 was removed when constructing, but by doing so, the upper part of the purging tank would become an opening, causing safety problems. And when the space above the purging tank was used as a parking lot etc., the problem was that the parking lot could not be used till the refilling and the construction of the parking lot floor is finished.

As described above, the prior art used a solid body with small liquidity such as sand and soil from rivers and mountains for the refillig material. So by only throwing it into the refilling space, an unnecessary space would occur in the refilling material, and the refilled portion would not harden because the refilling material would not spread through the entire space thoroughly, thus causing subsidence or loss of needed supportability. That is why rollering was necessary to harden refiller and gain supportability.

Further, the demolition of concrete buildings are increasing recently, and the way to recycle the concrete blocks were thought of in many sections, but the present condition is that not much amount is used in the form of a concrete block. For means of recycling, it is used not only as a refilling material but also as an aggregate such as recycled sand and recycled ballast by sorting the particles by their size after crushing and washing the concrete blocks.

### Technical Improvement and Advantages

The present invention is offering a refilling material which can omit rollering and is safe and certain in refilling, and to offer a refilling method using this material.

The refilling material comprises a material having liquidity in the state of fresh concrete. The refilling is done with this material having liquidity, and supportability is gained by hardening of the material.

### Brief Description of the Drawings

Fig.1 is an example showing the refilling method of the present invention being applied to a base construction.

Fig.2 is an example showing the refilling method of the present invention being applied to a construction of an underground structure.

Fig.3 is an example showing the refilling method of the present invention being applied to a refilling of a purging tank.

Fig.4 is a drawing showing the prior refilling method of a base construction.

Fig.5 is a drawing showing the prior refilling method of an underground structure.

Fig.6 is a drawing showing the prior refilling method of a purging tank.

Fig.7 is a flow chart showing the manufacturing process of the refilling material of the present invention and a refilling method using said refilling material.

### Best Mode for Carrying out the Invention

### Refilling Material

Refilling material according to the present application is explained below.

Up to this time, when producing construction aggregate from mountain soil etc., the ballast and sand gained by crushing the mountain soil was washed and sellectively parted by the particle size. By doing this, a sludge is produced. The same kind of sludge is also produced at fresh concrete factories. This sludge has liquidity, so it has no usage in itself and it could not be piled up for storage, but it was also difficult for disposal.

A filling material with liquidity of the present invention utilizes this sludge by replacing the mortar paste portion of fresh concrete with aggregate having liquidity such as sludge. It is a mixture of water, cement and aggregate with liquidity, and it is in a state of fresh concrete which has a liquidity at the time of construction and a character to set after the construction by the cement.

The components of the filling material of the present invention which is a material with liquidity in a state of fresh concrete will now be explained.

The filling material of the present invention is composed of a hardener, water and aggregate, and cement or lime etc. is used as the hardener, sludge is used as the aggregate.

The sludge used as the aggregate is a liquid in the state of colloid with fine particles floating, produced from the remainings of washing quarryings or from fresh concrete factories as mentioned above.

According to the purpose of usage, a recycled sand or recycled ballast could be added to the aggregate. When the recycled sand or recycled ballast is added, the cement left on the concrete blocks will still hold the ability as a hardener even after it is recycled into aggregate, so added to the increase in strength by putting in solid material, the amount of cement used could be economized.

### Refilling Method

The refilling method of the present application is explained below.

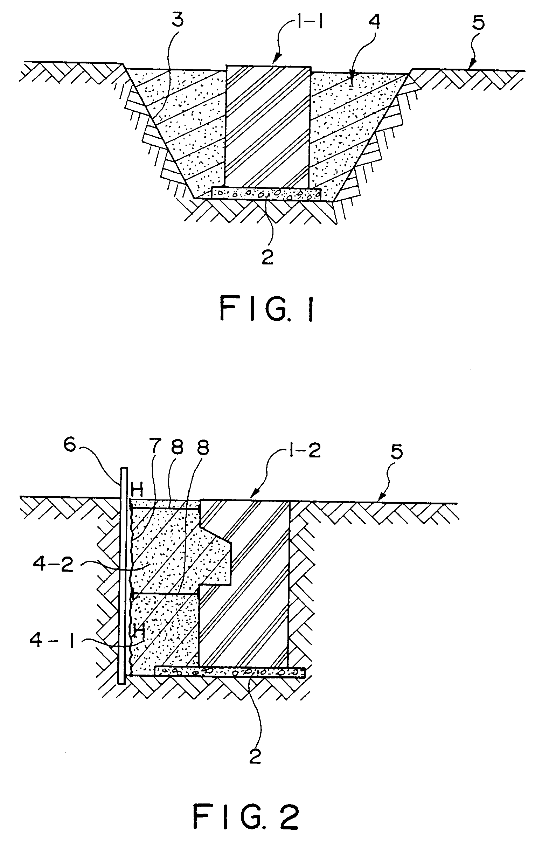

Fig.1 is an example showing the refilling method of the present invention. A base mortar 2 is flown into the space where a base 5 has been dug, and after a formwork has been set on top and reinforcement etc. set up if needed, a fresh concrete is flown into the formwork and a base beam 1-1 is constructed. When base beam is ready, the formwork will be removed, and a refilling material 4 having liquidity of the first invention is flown into a refilling space 3.

The refilling material used in the present invention has liquidity so it can fill up the refilling space without making a chink.

By adding vibration with a vibrator etc. when flowing in the refiller, the refilling could be done more elaborately.

In Fig.2, an example of the refilling method of the present invention applied to a construction of an underground structure having a jaw part extending to the side is shown.

Construction space is made by striking in a poling board 6 in the base 5 and excavating the interior. Mortar 2 is poured into the bottom part of construction space and the formwork of the construction is formed on top. After setting up reinforcement etc. if necessary, concrete is poured into the formwork and an underground structure is constructed. A beam 8 is set up between the formwork and the poling board 6 which is made to receive the supporting pressure of the poling board. A curing sheet 7 made of thin vinyl sheets or nonwoven fabric is provided on the surface of the poling board 6, and the refilling material 4-1 of the first invention is poured into the refilling space up to about the height of the lower beam 8. The refilling material would harden in about half a day or twenty-four hours. When the lower refilling material hardens, the lower beam will be removed, and then a refilling material 4-2 is poured in again. Then, after the upper beam is removed and the poling board is pulled off, the space is refilled to the height of the base 5.

By this method, even when the lower beam 8 is removed, the end part of the poling board 6 will already be refilled by the refilling material, so there will be no danger such as the poling board being flipped by the pressure of the base.

Also, some refilling material could be poured into the space where the poling board had been placed, so there will be scarcely any subsidence.

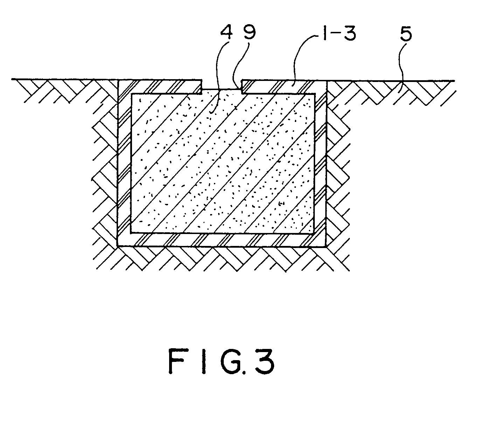

In Fig.3, the refilling method of the present invention being applied to the refilling of a purging tank is shown.

Inside a purging tank 1-3 set in the base 5, the refilling material 4 of the first invention is poured through a manhole 9.

The refilling material has liquidity, so it could fill the space inside the purging tank thoroughly without removing the upper slab at the time of construction.

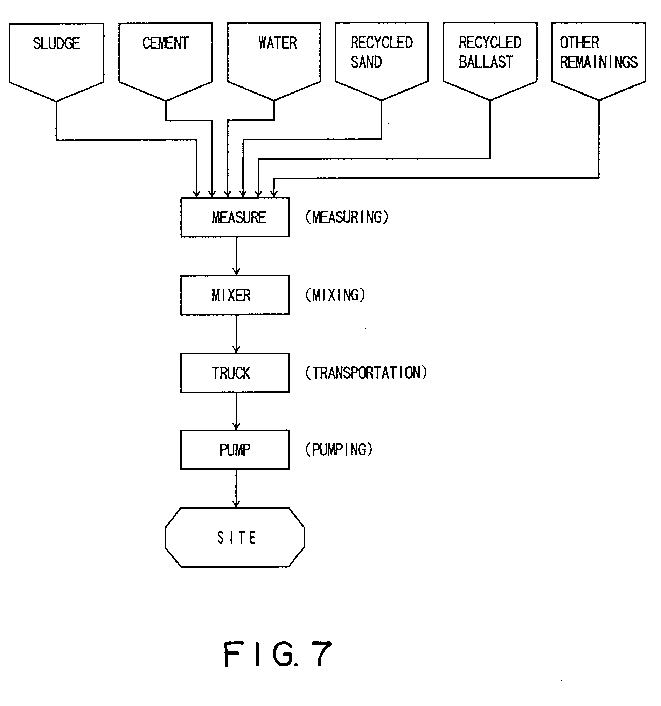

In Fig.7, the manufacturing method of the refilling material of the present invention and the flowchart of the refilling method using this refilling material is shown.

Sludge, cement, water, recycled sand, recycled ballast, and other remainings such as construction waste are measured according to the purpose, then thrown into the mixer and stirred for a fixed time. This refilling material is put into a fresh concrete truck and transported to the construction site. At the construction site, the material is poured into the refilling space by a pumping truck.

A recycled cement which is concrete waste made into fine particles could be used as the cement.

The measured ingredients could be put directly into the fresh concrete truck omitting the mixer, and the refilling material could be manufactured by stirring on the way of transporting. The refilling material could be poured into the refilling space directly from the mixer truck without using the pumping truck.

By using recycled sand or recycled ballast as the aggregate, the unused cement in it could be utilized, and the amount of cement used could be saved.

The refilling material of the first invention in the present application has an excellent effect in that it has the liquidity like fresh concrete, and it is easily used for constructing because refilling could be done for example by a fresh concrete pumping truck. Also, it is reliable because a secure supporting force could be gained by controlling the compounding of the hardener and water and flowable aggregate to gain preferred strength. Discarded sludge etc. including concrete waste could be recycled. Further, a refilling material with flexibility could be provided by controlling the amount of cement compounded, and by using this material, the refilled portion will have softness and the force needed could be gained. It is also effective in the point that not only the hardening speed but also the hardness could be controlled by adjusting the amount of the hardener and the flowable aggregate mixed, so excavation etc. after hardening could be done easily. Furthermore, it has the liquidity and the constructing method similar to that of fresh concrete, so it could be handled similarly to industrial products, and the quality of refilling and the workability at the refilling site will improve.

The refilling method of the second invention in the present application has an excellent effect in that unreasonable subsidence could be reduced by setting the supportability of the refilling portion freely according to the supportability of the basement, and that there is little chance of gap occurring between the refilling material since it has liquidity, so there is no need of using a roller, also there is no need for the space for workers inside the refilling space since a fresh concrete pumping truck could be used for supplying the refiller, so a refilling construction at a small area could easily be done. A large amount of refilling could be done in a short time by pouring in the refilling material, and when refilling a space fenced with poling boards, refilling will be done as high as the lower supporting beam, and when it hardens the supporting beam could be removed immediately and the upper portion could be refilled. Also, the refilling material could be filled thoroughly even under a jaw portion sticking out to the side, and also the subsidence of the basement when poling boards are pulled off could be prevented. Further, when refilling purging tank etc., since the refilling material has liquidity, the refilling construction could be done by simply pouring in the refilling material from the manhole without the need to remove the concrete slab on top, so there is no need for workers to go into the purging tank and the danger of oxygen shortage or gas poisoning when working could be prevented, and even when the space above is a parking lot, construction could be done with the space still being used. And also, construction could be done without effecting the existing buildings, so it is cheaper in cost than excavating and then removing it.

## Claims

1. A refilling material having liquidity formed by mixing a hardener, water, and aggregate having liquidity.

2. A refilling material having liquidity claimed in claim 1, wherein said hardener is cement, recycled cement, or lime, or more than two kinds of them mixed together.

3. A refilling material having liquidity claimed in claim 1, wherein said aggregate having liquidity is either a remaining from washing crushed stone or a sludge from fresh concrete.

4. A refilling material having liquidity claimed in claim 1, wherein recycled sand or recycled ballast is added to said aggregate having liquidity.

5. A refilling method characterized in that refilling space is refilled by a refilling material having liquidity formed by mixing a hardener, water, and aggregate having liquidity.

6. A refilling method claimed in claim 5, wherein refilling is done by pouring the refilling material into the refilling space.

7. A refilling method claimed in claim 5, wherein said hardener is cement, recycled cement, or lime, or more than two kinds of them mixed together.

8. A refilling method claimed in claim 5, wherein said aggregate having liquidity is either a remaining from washing crushed stone or a sludge from fresh concrete.

9. A refilling method claimed in claim 5, wherein recycled sand or recycled ballast is added to said aggregate having liquidity.
